# DEMANDE DE BREVET EUROPEEN

(11) **EP 2 267 669 A1**
(43) Date de publication de la demande: **29.12.2010**
(21) Numéro de dépôt: 10181612.2
(22) Date de dépôt: 02.03.2007
(51) Int. Cl.: G07F 7/00, E04H 6/14, G07B 15/00

(54) **Procédé et système de transport collectif**

(30) Priorité: 02.03.2006 FR 0601848
(62) Demande divisionnaire de: 07731071.2
(71) Demandeur: Hurpin, Patrick, 75015 Paris (FR)
(72) Inventeur: Hurpin, Patrick, 75015 Paris (FR)
(74) Mandataire: Dossmann, Gérard

(57) **Abrégé**

L'invention a pour objet un procédé et un système global de transport de personnes avec partage de véhicules individuels, dans lequel une pluralité de véhicules (5) sont mis a la disposition d un ensemble d' usagers pour leurs déplacements a l'intérieur d'un territoire équipé d'une pluralité de garages (T) avec des moyens automatiques de réception et de mise à disposition d'un véhicule. Selon l'invention, le territoire étant une agglomération urbaine équipée d'un réseau de lignes de transport en commun (R, M), les garages (T) sont situés à une faible distance, parcourable à pied en quelques minutes, au moins de certaines des stations de correspondance (C) du réseau et sont du type à déplacement vertical des véhicules permettant le stockage d'au moins une dizaine de véhicules (5) sur une surface au sol réduite, lesdits véhicules individuels (5) constituant, pour les usagers, un complément au réseau de transport en commun (R, M) permettant à tout moment, à un usager, de prendre en charge un véhicule (51) à la sortie d'une station de transport en commun, d'effectuer un trajet individuel et de restituer le véhicule sur l'emplacement de réception (12) d'un garage (T) situé à proximité immédiate de sa destination ou bien d'une station de correspondance (C) pour continuer son déplacement par transport en commun.

## Description

L'invention a pour objet un procédé et un système de transport individuel et collectif de personnes dans un territoire, en particulier un site urbanisé, au moyen d'un ensemble de véhicules autonomes mis à la disposition d'un ensemble de personnes, en complément d'un réseau de transport en commun.

De nos jours, les grandes agglomérations sont de plus en plus polluées et congestionnées par la circulation des véhicules particuliers. Pour y remédier, on essaie de développer les réseaux de transport collectif.

Cependant, les autobus qui utilisent les voies de circulation normales restent relativement polluants et peu rapides car, même si on leur réserve certaines voies, ils sont gênés, au moins dans les carrefours, par les véhicules particuliers et leur vitesse moyenne de circulation reste assez faible.

Les transports souterrains, de type métro, sont très peu polluants et leur vitesse est satisfaisante. Toutefois, si des réseaux assez denses ont pu être construits dans certaines villes au début du XX^{ème} siècle, leur extension est très coûteuse ne peut se faire que sur certaines lignes ou en utilisant les réseaux ferroviaires existants.

Par ailleurs, le développement urbain entraîne un accroissement, pour les personnes, de la distance entre le domicile et le lieu de travail.

Pour faciliter l'accès aux centres urbains, on a réalisé des réseaux régionaux de transports utilisant notamment les lignes de chemins de fer existantes, mais ces lignes sont disposées, habituellement, en étoile vers le centre de l'agglomération et les liaisons périphériques, périurbaines, suburbaines ou entre banlieues, sont peu nombreuses.

Le transport par véhicule individuel reste donc nécessaire pour un grand nombre de personnes, au moins pour rejoindre une ligne de transport régional et il faut donc réaliser des parkings qui représentent un coût élevé pour la collectivité car ils occupent une surface importante en raison de l'encombrement des véhicules.

Même si l'on réalise des parkings en étages, il faut une voie d'accès et des circulations à chaque étage et la surface nécessaire par véhicule est de l'ordre de 25 m² par véhicule garé. De sorte que les parkings occupent donc une place importante et, s'ils sont réalisés en surface, sont très onéreux pour rester rentables, en raison du prix du terrain en zone urbaine.

Dans certaines villes, lorsque le sous-sol permet la réalisation de parkings souterrains, on peut utiliser le domaine public mais le nombre de tels parkings reste insuffisant et très coûteux.

De plus, les automobiles personnelles ainsi utilisées restent immobilisées en surface pendant la plus grande partie du temps.

De toute façon, l'augmentation du trafic automobile et la pollution qui en résulte nécessitent la recherche d'autres solutions pouvant aller jusqu'à la limitation de circulation pour les véhicules privés ou leur réduction grâce à un système de péage urbain.

Pour les personnes venant d'un endroit éloigné, on peut réaliser de grandes aires de stationnement à une certaine distance du centre et à proximité d'une station de transport en commun pour permettre à l'usager d'accéder au centre de cette façon. Cependant, les réseaux de transport sont rarement assez denses et nécessitent un trajet à pied plus ou moins long pour arriver à destination.

De plus, même si l'on construit une ligne de transport circulaire entre les banlieues, autour du centre, les possibilités de transport en commun sont toujours assez réduites à la périphérie et très coûteuse à mettre en oeuvre.

L'usage d'un véhicule individuel reste donc nécessaire dans de nombreux cas.

Bien entendu, on peut utiliser des taxis, mais leur usage est très onéreux et il est, de toutes façons, difficile de trouver un taxi en dehors du centre ville et de circuler dans les banlieues.

Il est également possible, pour éviter l'utilisation d'un véhicule personnel, de louer une automobile dans une agence, par exemple à proximité d'une gare ou d'un aéroport, et restituer l'automobile louée, éventuellement dans une autre agence. Un tel système est assez onéreux et ne convient que pour des déplacements relativement importants, par exemple entre deux villes éloignées l'une de l'autre, et pendant un temps assez long, d'une journée ou plus.

Pour faciliter les déplacements des personnes sur un territoire limité en évitant l'emploi de véhicules privés, on a également proposé des systèmes de partage des véhicules.

Le document EP - A - 0991031, par exemple, décrit un tel système de partage prévu pour permettre des déplacements individuels entre les différents points d'un parc d'attraction. Un tel parc est évidemment interdit aux véhicules privés et des navettes permettent d'aller d'une attraction à l'autre mais nécessitent à chaque fois un temps d'attente. Ce document prévoit donc un système de partage d'un ensemble de véhicules répartis entre des parkings situés à proximité de l'hôtel et les différentes attractions et contenant chacun plusieurs véhicules disponibles. Chaque visiteur se procure un titre de transport en liaison avec une unité de contrôle qui lui donne accès à un parking et autorise la prise en charge d'un véhicule pour se rendre à une autre attraction où se trouve un autre parking dans lequel le véhicule peut être garé, afin d'être utilisé ensuite, par un autre visiteur. Ainsi, au lieu d'être loué par un même visiteur pour toute la durée de son séjour dans le parc en restant garé devant chaque attraction pendant le temps de la visite, un véhicule garé par un visiteur à son arrivé devant une attraction peut être immédiatement repris par un autre visiteur sortant de la même attraction. Le nombre de véhicules en service et les dimensions de chaque parking doivent simplement être prévus en fonction du nombre de visiteurs et de la durée de l'attraction pour que chaque visiteur puisse trouver un véhicule disponible à sa sortie.

L'inventeur a eu l'idée de créer tout un système de stockage et de partage de véhicules afin de faciliter la circulation en agglomérations urbaines, il serait possible d'utiliser un ensemble de véhicules autonomes comme un complément à un réseau de transport en commun, de façon à ce que les usagers, étant assurés de disposer d'un véhicule chaque fois qu'ils en auraient besoin, renonceraient à utiliser leur automobile personnelle à l'intérieur de l'agglomération ou, lorsqu'ils viennent de l'extérieur, accepteraient de garer leur automobile à la périphérie, afin d'utiliser les transports en commun proposé.

L'inventeur s'est cependant avisé que, pour cela, plusieurs conditions devraient être remplies.

Tout d'abord, les études effectuées sur les transports en commun ont montré que la majorité des usagers n'acceptent un déplacement à pied que sur une assez faible distance. Par exemple, dans une ville comme Paris (ou d'autres grandes villes) bénéficiant d'un réseau de transport en commun dense, ou a réalisé de nouvelles liaisons de correspondance entre les lignes ou avec des lignes de transport régional mais il est apparu que les usagers acceptaient difficilement que le temps de correspondance à pied dépasse 4 à 5 minutes, soit 300 à 500 mètres au maximum (à moins de proposer des trottoirs roulants).

Pour compléter le réseau de transports en commun par un système de partage de véhicules, il faut donc que les garages contenant des véhicules disponibles soient situés à proximité immédiate d'une station de correspondance.

Cela signifie qu'il faut réaliser un grand nombre de garages répartis sur un territoire urbain où la place libre est rare et le terrain très onéreux.

D'autre part, chaque usager voudra trouver immédiatement un véhicule disponible et, compte tenu du nombre d'usagers concernés, bien supérieur à celui des visiteurs d'une attraction, chaque garage doit donc contenir un grand nombre de véhicules, en pratique 15 à 20 ou plus, selon la station desservie du réseau de transport.

De même, chaque usager restituant un véhicule après usage souhaitera effectuer cette opération très rapidement pour reprendre immédiatement les transports en commun avec un temps de correspondance aussi réduit que possible. L'invention a donc pour objet un nouveau procédé de transport individuel et collectif avec partage de véhicules, permettant de résoudre l'ensemble de ces problèmes.

Conformément à l'invention, le territoire étant une agglomération urbaine équipée d'un réseau de lignes de transport en commun avec des stations simples et des stations de correspondance aux croisements de lignes, des garages sont situés à une faible distance, parcourable à pied en quelques minutes, d'au moins certaines stations de correspondance du réseau et ces garages sont du type à déplacement vertical des véhicules permettant le stockage d'au moins une dizaine et plus de véhicules autonomes sur une surface au sol réduite, chaque garage comportant au moins un emplacement d'entrée vide pour la réception immédiate d'un véhicule après usage et un emplacement de sortie contenant un véhicule disponible pour la prise en charge immédiate de celui-ci par un usager, lesdits véhicules autonomes constituant, pour les usagers, un complément au réseau de transport en commun permettant à tout moment, à un usager, de prendre en charge un véhicule à la sortie d'une station de transport en commun, d'effectuer un trajet individuel et de restituer le véhicule sur l'emplacement d'entrée d'un garage situé à proximité immédiate d'une station de correspondance pour continuer son déplacement par les transports en commun.

A cet effet, dans un mode de réalisation préférentiel, chaque garage automatique est du type à Noria avec déplacement vertical de cases de stockage sur deux colonnes, respectivement montante et descendante, de façon à permettre, d'une part le rangement d'un ou plusieurs véhicules sur des emplacements d'entrée et leur remplacement immédiat par une ou des cases vides prêtent à recevoir un ou des nouveaux véhicules et, d'autre part, après enlèvement d'un ou des véhicules par un ou des usagers, la mise en place immédiate d'un ou de nouveaux véhicules disponibles sur les emplacements de sortie pour sa prise en charge par un ou des usagers.

L'invention couvre donc un système global de transport de personnes dans une agglomération urbaine comportant :
- au moins un réseau de lignes de transport en commun avec des stations simples et des stations de correspondance aux croisements des lignes ;
- un ensemble de véhicules autonomes munis de moyens de verrouillage - déverrouillage et mise en route susceptibles d'être actionnés par les mêmes moyens de commande, lesdits véhicules étant mis à la disposition d'un ensemble d'usagers munis chacun d'un titre de transport personnalisé formant un moyen de commande ;
- une pluralité de garages automatiques placés au moins à proximité de certaines stations du réseau ; chaque garage étant d'un type à déplacement vertical des véhicules permettant le stockage d'au moins une dizaine de véhicules et plus sur une surface au sol réduite et comportant, au niveau du sol, au moins un ou des emplacements vides pour la réception immédiate d'un ou des véhicules ramenés après usage et un ou des emplacements contenant un ou des véhicules disponibles prêt à être pris en charge par un ou des usagers ;
- chaque usager ayant à se déplacer jusqu'à un point de l'agglomération urbaine, périurbaine ou suburbaine pouvant ainsi effectuer une partie du trajet par transport en commun et une autre partie en véhicule autonome avec un déplacement à pied et un temps d'attente très réduits pour la prise en charge et la restitution du véhicule.

Avantageusement, le garage peut être enterré dans sa partie inférieure, au dessous du niveau de la zone de manutention, de façon à réduire la hauteur du bâtiment au dessus du sol.

Selon une autre caractéristique préférentielle, les véhicules sont à propulsion électrique ou biénergie et chaque emplacement de rangement est équipé de moyens de rechargement des batteries du véhicule pendant le temps de stockage dans le garage. Selon une autre caractéristique préférentielle, chaque titre de transport constitue un moyen de paiement, par son porteur, de l'usage du véhicule selon la durée d'utilisation ou la distance parcourue.

De préférence, ces titres de transport sont constitués chacun d'une carte à puce avec code personnalisé, programmée pour permettre au porteur après saisie de son code, toutes les opérations nécessaire à la prise en charge d'un véhicule, et le paiement de l'usage de celui-ci. Une telle carte à puce peut, en outre, servir de passe pour l'utilisation des transports en commun sur une certaine zone et pendant un certain temps.

Par ailleurs, l'invention ne permet pas seulement de réduire et, même de supprimer la circulation automobile dans le centre d'une ville. Elle peut aussi s'appliquer à l'ensemble d'une agglomération urbaine comprenant des banlieues périphériques qui, habituellement, sont peu ou mal desservies par les transports en commun.

Selon une autre caractéristique particulièrement avantageuse, l'agglomération comportant un centre entouré de banlieues périphériques desservies par un réseau de transport régional, au moins certaines des stations du réseau de transport régional sont équipées de garages automatiques pour le stockage de véhicules disponibles, de façon qu'un usager empruntant le réseau de transport régional puisse, à la sortie d'une station, prendre en charge immédiatement un véhicule pour continuer individuellement son déplacement jusqu'à destination et restituer ensuite son véhicule, soit au retour dans le même garage, soit dans un autre garage à proximité de sa destination.

En particulier, dans le cas habituel où les lignes de transport régional sont très écartées les unes des autres les parties du territoire ne comportant pas de stations de transport en commun sont équipées de garages automatiques répartis de façon à être accessibles rapidement à pied par un usager pouvant ainsi prendre en charge un véhicule pour rejoindre, soit une station de transport en commun équipée d'un garage pour la réception du véhicule, soit un autre garage à proximité de sa destination, pour y déposer son véhicule.

Mais l'invention permet aussi de faciliter les liaisons entre une ville importante et des villes moyennes placées à une distance relativement importante mais compatible avec l'autonomie d'un véhicule. Chaque ville de la périphérie peut, en effet, être équipée d'un ou plusieurs garages automatiques, selon son importance, de façon à permettre à un usager de rejoindre le réseau de transport de l'agglomération centrale ou de se rendre dans une autre ville de la périphérie sans utiliser son véhicule personnel et en ne payant que le temps de parcours effectué. D'autres caractéristiques avantageuses de l'invention apparaîtront dans la description qui va suivre d'un système de transport adapté à une ville, décrit à titre d'exemple non limitatif, en référence aux dessins annexés.
La figure 1 est un schéma d'ensemble d'une ville équipée d'un système de transport selon l'invention.
La figure 2, est une vue de face d'un garage automatique.
La figure 3 est une vue de coté d'un garage automatique.
La figure 4 est une vue en coupe transversale du mécanisme de rangement des véhicules.
La figure 5 est une vue en coupe horizontale du mécanisme.
La figure 6 montre schématiquement, en perspective, le fonctionnement du mécanisme.
Les figures 7 et 8 montrent schématiquement, respectivement en vue de côté et en vue de dessus, le retour d'un véhicule après usage, pour rangement dans le garage. La figure 9 est une vue partielle, en élévation, du garage avec les véhicules rangés.
Les figures 10 et 11 montrent schématiquement, en vue de côté et en vue de dessus, la prise en charge d'un véhicule par un usager.
La figure 12 montre diverses possibilités d'implantation d'un garage.
La figure 13 illustre schématiquement le système de paiement.
Les figures 14 et 15, montrent, en coupe horizontale, deux variantes de réalisation.
La figure 16 illustre l'application de l'invention à une ville importante entourée de banlieues ou de villes nouvelles.

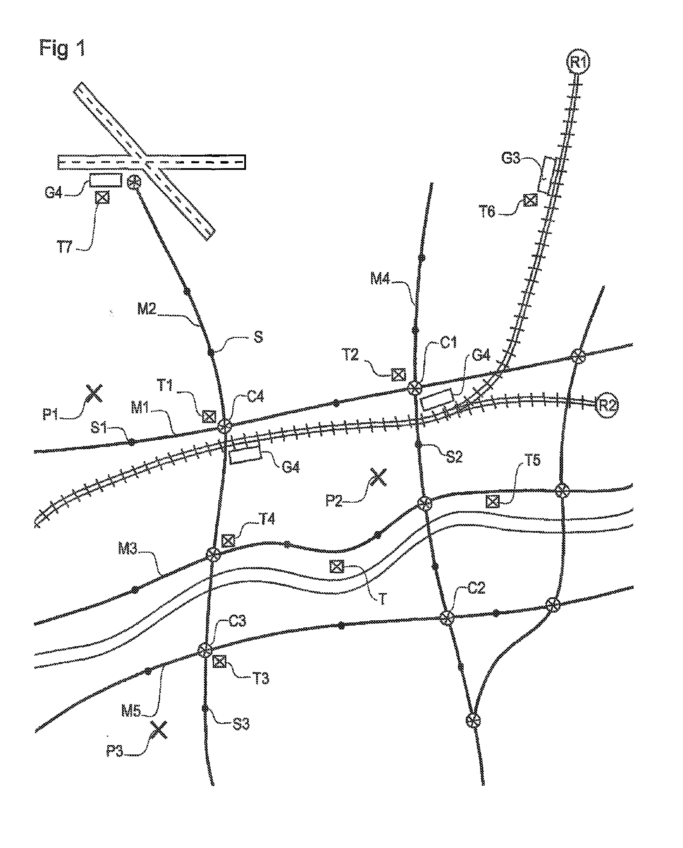

La figure 1 montre schématiquement un exemple de site urbain équipé de plusieurs réseaux de transports collectifs, par exemple, des lignes souterraines ou de surface M₁, M₂... Mi sur lesquelles sont disposées des stations simples S et des stations de correspondance C, ainsi que des lignes ferroviaires de transport régional R₁, R₂ avec des gares G₁, G₂.

Grâce à ce système existant, un usager se trouvant en un point P₁ de la ville et voulant utiliser les transports en communs pour accéder à un point P₂ pourra se rendre à la station S₁ la plus proche pour emprunter la ligne M₁ jusqu'à la station de correspondance C₁ puis prendre la ligne M₄ pour parvenir à la station S₂ la plus proche du point P₂. S'il juge le temps de trajet trop long, il peut appeler un taxi pour aller directement de P₁ à P₂ mais les frais de transports sont élevés.

D'autre part, le même usager, après être passé au point P₂, peut souhaiter se rendre, par exemple au point P₃.

La distance entre P₂ et P₃ étant trop longue pour un trajet à pied, il doit reprendre la ligne M₄ à la station S₂, changer à la station de correspondance C₂ pour prendre la ligne M₅, changer encore à la station C₃ pour prendre la ligne M₂ et descendre à la station S₃ la plus proche de sa destination P₃.

Un tel trajet est donc assez long et compliqué et exige des trajets élémentaires à pied dans les stations de correspondance et des temps d'attente.

En revanche, comme on va le voir maintenant, le système selon l'invention permet de simplifier le transport et d'en réduire la durée en donnant à l'usager une possibilité de transport autonome qui vient en complément des transports en commun en assurant des temps de correspondance réduits.

Dans ce système, le territoire est équipé d'un certain nombre de garages automatiques T₁, T₂ ... Ti qui, de préférence, sont placés à proximité de stations de correspondances du réseau de transports en communs ou dans des endroits stratégiques et dans lesquels sont rangés en réserve un certain nombre de véhicules autonomes, par exemple 15, 20 ou plus.

De la sorte, l'usager arrivant de P₁ par la ligne M₁ pourra descendre à la station de correspondance C₁, se faire remettre un véhicule dans le garage T₂ à proximité de C₁, parcourir librement le trajet jusqu'en P₂ en choisissant son itinéraire puis conserver son véhicule pour se rendre à sa seconde destination P₃ et, ensuite, rejoindre le garage automatique T₃ pour y remettre son véhicule et reprendre la ligne de transport en commun M₂ pour rejoindre la station S₁ de la ligne M₁ en changeant à la correspondance C₄.

Cependant, dans la mesure, où les déplacements sont individuels, bien qu'effectués au moyen de véhicules à la disposition de tous, l'usager a le choix entre diverses solutions. Par exemple, il peut aussi descendre de la ligne M₁ à la première station C₄, se faire remettre un véhicule au garage le plus proche T₁, et ensuite, choisir librement son itinéraire pour passer par les points P₂ et P₃, et éventuellement revenir au garage T₁ pour y remettre son véhicule et reprendre directement la ligne M₁ par laquelle il était arrivé.

Le système selon l'invention, donne donc une grande liberté aux usagers pour un coût plus modique que l'usage d'un taxi ou d'une voiture de location dans la mesure où l'on peut mettre à disposition un grand nombre de personnes ayant acheté une carte d'accès, un très grand nombre de véhicules mis en réserve dans plusieurs garages répartis sur le territoire, de préférence à proximité d'une station d'un réseau de transports en commun ou bien d'autres points stratégiques de la ville tels que les gares, des zones commerciales, des hôpitaux, des universités ou des plate-formes multimodales.

Comme on l'a indiqué plus haut, pour réduire la circulation des véhicules privés, les véhicules autonomes mis à la disposition des usagers doivent constituer un véritable complément aux transports en commun et les garages automatiques répartis sur le territoire doivent donc permettre une prise en charge et une restitution rapide des véhicules, de telle sorte que le temps total de chaque correspondance ne soit que de quelques minutes.

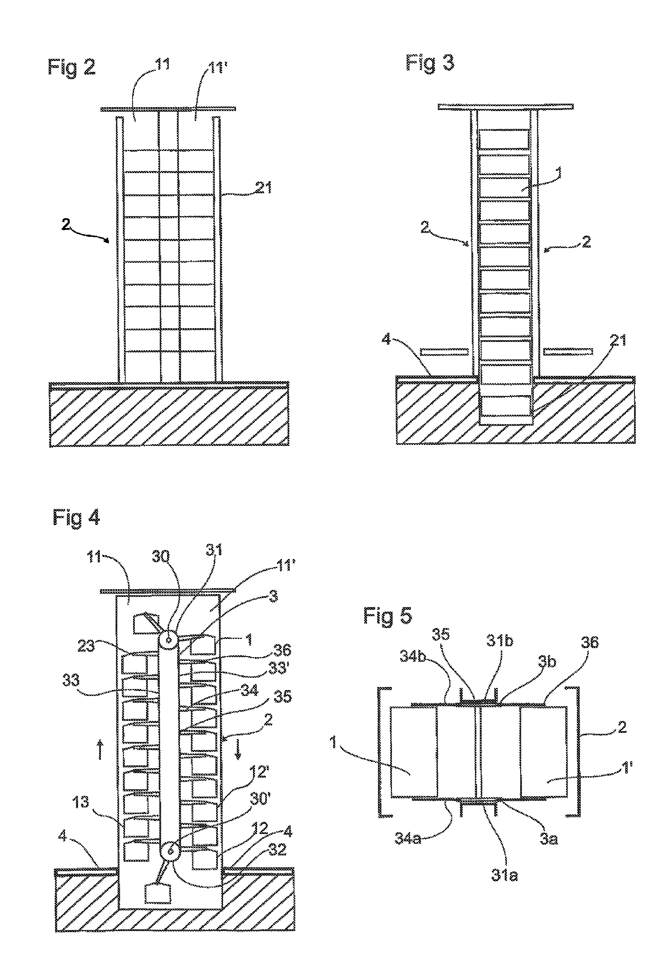

Pour cela, il est particulièrement avantageux que tels garages automatiques équipant le territoire soient du type dit à Noria, représenté schématiquement sur les figures 2 à 6.

Un tel garage comporte, d'une façon générale, un ensemble de cases ou plate-formes de rangement 1 superposées formant deux rangées parallèles 11, 11' à l'intérieur d'un bâtiment 2 en forme de tour dans lequel est ménagé un mécanisme 3 de mise en circulation de cases 1 représenté schématiquement sur la figure 4.

Ce mécanisme comporte un lien sans fin 3 tel qu'une chaîne tendue entre deux roues 31 ,32 placées respectivement, à la partie supérieure et la partie inférieure de la tour 2 et entraînées en rotation autour d'axes horizontaux 30, 30' par un moteur non représenté.

La chaîne sans fin 3 comporte donc deux parties verticales parallèles respectivement une partie montante 33 et une partie descendante 33' sur lesquelles sont fixés des bras 34 maintenus perpendiculaires à la chaîne 3 par des moyens d'encastrement 35.

Chaque case 1 est fixée par sa partie supérieure à l'extrémité libre 36 d'un bras 34 au moyen d'une articulation permettant de réaliser une suspension pendulaire.

De la sorte, comme le montre la figure 4, le long des deux parties verticales 33, 33' de la chaîne 3, les bras 34 s'étendent horizontalement et les cases 1 sont superposées en deux rangées parallèles 11, 11'. Lorsque les roues 31, 32 sont entraînées en rotation, les cases de l'une des rangées 11 sont entraînées verticalement vers le haut et celles de la rangée 11' vers le bas. En passant sur les deux roues 31 et 32 les bras 34 qui restent orientés radialement tournent autour de l'axe 30, 30', les cases 1 restant horizontales grâce à leur suspension pendulaire.

Les véhicules placés dans les cases 1 peuvent être répartis de façon à maintenir un certain équilibre entre les deux rangées respectivement montantes 11 et descendantes 11'. De la sorte, la tour 2, peut être constituée d'une ossature, de préférence métallique, relativement légère.

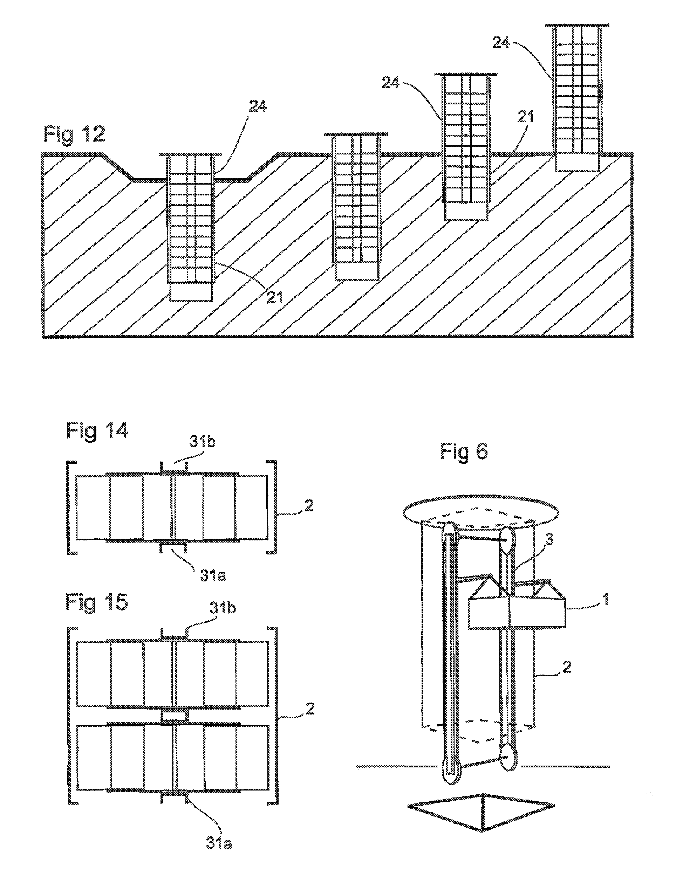

Comme le montrent les figures 5 et 6, la chaîne sans fin 3 comporte deux branches 3a, 3b, chaque case 1, étant suspendue par une paire de bras 34a, 34b qui tournent sur deux roues écartées 31a, 31b au niveau supérieur et au niveau inférieur.

La base 21 de la tour 2 est encastrée dans le sol sur une hauteur suffisante pour assurer la stabilité et une plate-forme de manutention 4 est ménagée soit directement au sol, comme indiqué sur la figure 4, soit à un niveau intermédiaire.

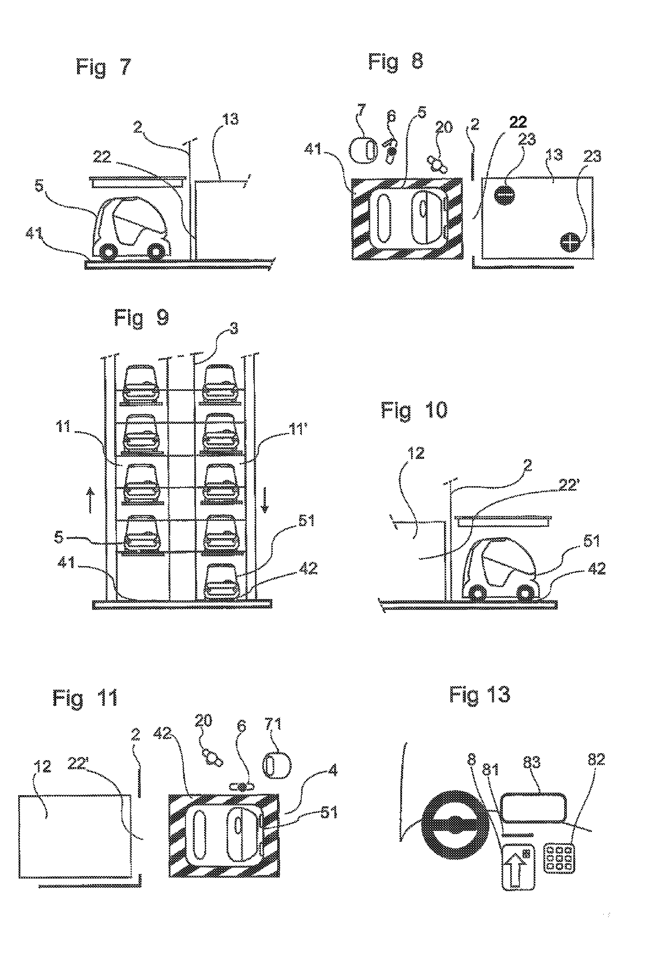

Ainsi, la rotation des roues 31, 32 pour le déplacement de la chaîne sans fin 3 peut faire venir au niveau de la plate-forme de manutention 4, soit une case 12 de la rangée descendante 11' soit une case 13 de la rangée ascendante 11. Sur les figures 7 et 8, on a représenté schématiquement le processus de dépôt d'un véhicule 5 après usage.

Sur la plate-forme 4 au pied de la tour 2, est ménagée une allée de restitution 41, recouverte d'une toiture, en face d'une porte d'accès 22 s'ouvrant à la base de l'ossature de la tour 2.

Après avoir rangé son véhicule sur l'allée de restitution 41 , le conducteur enregistre son retour dans une borne de lecture 7 et un agent de service 20 affecté au garage 2 prend en charge le véhicule 5 pour l'introduire dans une case vide 13 qui a été amenée au niveau de la plate forme de manutention 4 par déplacement de la chaîne 3.

De préférence le véhicule 5 est à propulsion électrique ou biénergie et chaque case 1 est munie de bornes électriques de rechargement 23 reliées à une source de tension.

Comme le montre la figure 9, le véhicule 5 remonte ensuite à l'intérieur du garage au fur et à mesure du déplacement de la chaîne sans fin 3, soit pour la prise en charge d'un véhicule 51 par un nouveau client et son remplacement par un autre véhicule disponible 52, soit pour l'arrivée au garage et le rangement d'un nouveau véhicule dans la case d'entrée 12.

Chaque véhicule passe ainsi progressivement de la rangée montante 11 à la rangée descendante 11' et reste donc stocké dans la tour 2 pendant un temps permettant le rechargement des batteries.

Le nombre de véhicules mis en réserve dans chaque tour peut être adapté à la fréquence prévisible d'utilisation afin d'assurer le temps nécessaire au rechargement des batteries.

Comme on l'a indiqué plus haut, l'utilisation de garages de type à Noria, avec une colonne montante 11 et une colonne descendante 11', permet de ranger un grand nombre de véhicules 5 sur une surface limitée à celle des deux colonnes et à l'espace nécessaire entre celles-ci.

De plus, par rapport à un garage en étage classique, un garage automatique avec déplacement vertical des véhicules ne nécessite aucune rampe d'accès et aucun plancher, les différents niveaux étant séparés seulement de la hauteur nécessaire à un véhicule, puisque les usagers n'ont pas accès à l'intérieur du bâtiment.

II est donc possible, comme le montrent les figures 2 à 5, de garer 15 à 20 véhicules ou plus sur une emprise au sol de l'ordre de trois à quatre fois inférieur à la surface nécessaire d'un parking traditionnel, en fait, le nombre de véhicules garés dépend seulement de la hauteur du bâtiment et de son emprise réduite.

En pratique, alors qu'un garage en étages classique occupe une surface au sol d'environ 25 m² par véhicule, un garage à Noria à deux colonnes, réalisé dans une tour ayant une hauteur d'une trentaine de mètres, occupe une largeur d'une dizaine de mètres et une profondeur d'une dizaine de mètres, ce qui représente, une surface foncière réduite, c'est à dire 3 à 5 m² par véhicule rangé.

L'utilisation de garages de ce type permettra donc, du fait de cette emprise au sol très réduite, de réaliser, même en centre ville, un assez grand nombre de garages automatiques contenant un nombre de véhicules disponibles assez grand, par exemple 15 à 30 ou plus, pour que, à tout moment, un usager sortant d'une station de transport en commun, puisse trouver un véhicule disponible.

De plus, le déplacement vertical pas à pas des cases contenant des véhicules, permet, après le rangement d'un véhicule restitué dans une case, de remplacer immédiatement celle-ci par une case vide 12 et, après enlèvement d'un véhicule 51 par un usager, de remplacer celui-ci immédiatement par un nouveau véhicule disponible 52 sur l'emplacement de sortie 13.

De plus, le déplacement vertical pas à pas des cases contenant des véhicules, permet, après le rangement d'un véhicule restitué dans une case, der remplacer immédiatement celle-ci par une case vide 12 et, après enlèvement d'un véhicule 51 par un usager, de remplacer celui-ci immédiatement par un nouveau véhicule disponible 52 sur l'emplacement de sortie 13.

De la sorte, les garages du type à Noria permettent de répondre à toutes les conditions nécessaires pour que les véhicules ainsi mis à la disposition des usagers constituent un véritable complément au réseau de transport en commun, chaque usager étant assuré de se procurer un véhicule autonome ou de le restituer à proximité d'une station, avec un déplacement à pied et un temps d'attente du même ordre que pour une correspondance entre deux lignes.

Il est à noter, à cet égard, qu'en raison du grand nombre de véhicules mis à disposition des usagers et de la fréquence d'utilisation que l'on peut prévoir du fait que les véhicules viennent en complément des transports en commun, il sera rentable d'affecter un agent à chaque garage pour superviser les opérations de prise en charge et de restitution des véhicules et rendre celles-ci encore plus rapides, une automatisation complète du système sans agent sera envisagé.

Les figures 10 et 11 montrent schématiquement la prise en charge d'un véhicule par un nouvel usager qui présente tout d'abord son titre de transport à une borne de lecture 71 disposée à la sortie 22' du garage afin de faire reconnaître sa qualité de client.

Un agent de service 20 ou automatisme fait avancer un véhicule 51 placé à l'avance au niveau de la plate-forme de manutention 4 pour le positionner sur la zone de prise en charge 42.

En cas de besoin il effectue les vérifications nécessaires et l'usager peut alors mettre en route le véhicule 51 pour effectuer un parcours libre avant de remettre son véhicule, soit dans le même garage au retour soit dans un autre garage placé à un autre endroit de la ville.

Comme indiqué plus haut, un même titre de transport personnalisé peut constituer simultanément une autorisation d'accès à l'un quelconque des garages pour la prise en charge ou la remise d'un véhicule, un moyen de commande du verrouillage - déverrouillage et de mise en route de l'un quelconque des véhicules et un moyen de paiement de l'usage du véhicule selon la durée d'utilisation ou, éventuellement de la distance parcourue.

Ce titre de transport peut être constitué, avantageusement, d'une carte à puce avec code secret, permettant à son porteur, après saisie de son code, toutes les opérations nécessaires à la prise en charge d'un véhicule et au paiement de son usage.

La carte à puce permet d'accéder à la zone de manutention si celle ci est sécurisée et de se faire reconnaître en la présentant à une borne d'entrée 7 ou de sortie 71 du garage.

Comme le montre la figure 13, le conducteur peut insérer sa carte à puce 8 dans un lecteur 81 et saisir son code sur un clavier 82 pour commander le déverrouillage du véhicule et sa mise en route.

Le compteur 83 s'enclenche au démarrage ou lorsque la carte est insérée dans la borne de sortie 71 et s'arrête au retour lorsque la carte est insérée dans la borne d'entrée 7.

Pour faciliter encore l'usage des véhicules en complément des transports en commun, la carte à puce achetée par l'usager peut aussi constituer un passe pour l'utilisation du réseau sur une certaine zone de l'agglomération et pendant un temps déterminé. Le téléphone portable de chaque client relié au réseau internet, pourra permettre d'obtenir un code personnalisé autorisant la réservation et le démarrage des véhicules.

Grâce au rangement des véhicules en deux rangées superposées et bien équilibrées, le garage peut être constitué d'une ossature assez légère relativement peu coûteuse et d'encombrement réduit.

II est à noter, en outre, qu'en service normal, aucune personne ne doit pénétrer à l'intérieur du garage, ce qui permet de supprimer les planchers et de simplifier les systèmes d'aération.

Comme le montre la figure 12, une telle structure peut être enfoncée dans le sol à un niveau variable au moyen, par exemple des techniques de foncage utilisées pour la construction de piles de ponts.

Selon l'implantation du garage dans la ville, et, bien entendu, la nature du sol, on pourra donc faire varier les hauteurs relatives de la partie enterrée 21 et de la superstructure 24.

Un tel avantage facilitera encore l'implantation d'un assez grand nombre de garages même en centre ville.

Bien entendu l'invention se limite pas aux détails du mode de réalisation qui vient d'être décrit à titre d'exemple non limitatif mais couvre, au contraire, toutes les variantes utilisant, notamment des moyens équivalents.

Dans le cas, par exemple, où l'on peut prévoir une forte utilisation du système, il serait possible de réaliser des garages de plus grandes dimensions, par exemple, un système à double plateau tel que représenté schématiquement sur la figure 14, qui permet de ranger plus de 40 véhicules et plus dans un espace de 15 à 16 mètres de largeur ou encore le système à quatre plateaux juxtaposés représenté sur la figure 15 qui permet de ranger 80 véhicules et plus dans un espace ayant une quinzaine de mètres de largeur et de profondeur.

D'autre part, il est préférable d'utiliser des véhicules à propulsion électrique ou biénergie afin de réduire la pollution par émission de gaz dans les villes mais le système est applicable aussi à des véhicules à propulsion classique dans la mesure ou l'utilisation d'un garage automatique permet d'éviter toute mise en route du moteur à l'intérieur du garage.

De même, il est particulièrement avantageux d'utiliser des véhicules identiques ou de petites tailles afin de réduire les dimensions du garage mais l'on pourrait aussi utiliser plusieurs types de véhicules ayant des dimensions compatibles avec celles du garage.

Pour faciliter son utilisation par un grand nombre d'usagers et les conduire à éviter l'emploi de leur véhicule personnel, il serait d'ailleurs possible de donner un certain choix entre plusieurs types de véhicules restant, cependant, dans un encombrements réduits, par exemple un véhicule pour 2 personnes avec un grand espace pour bagages, ou un véhicule pour 4 personnes, ou encore un véhicule du type pick-up, permettant un chargement facile des bagages ou autres objets.

Plusieurs types de véhicules peuvent aussi être répartis sur les colonnes 11, 11' du garage, de façon à faire venir sur l'emplacement de sortie 13 et sur ordre de l'agent affecté au garage ou un système automatisé adapté, le type de véhicule choisit par l'usager.

Par ailleurs, le trajet étant autonome et facturé selon la durée d'utilisation du véhicule, l'usager peut effectuer des distances assez grandes, par exemple entre le centre ville et les banlieues ou bien entre des villes moyennes autour d'une métropole.

Ainsi, un garage T₆ pourra être placé à proximité d'une gare G₃ d'une ligne de transport régional R₁. Un garage T₇ pourra aussi être placé à proximité d'une aérogare G₄ à une distance relativement importante de la ville.

Cependant, lorsque le prix du terrain ne justifie pas la construction d'un garage automatique, il est aussi possible de mettre à la disposition des usagers, dans un parking en surface, un certain nombre de véhicules du type convenant aux garages placés dans la ville, un véhicule quelconque pouvant être déverrouillé et mis en route au moyen d'un titre de transport, une carte à puce ou par une connexion Internet délivrant un code d'accès personnalisé.

Dans ce cas l'usager arrivant en avion aura la possibilité de se faire remettre un véhicule autonome au garage T₇, à proximité de l'aérogare G4 pour se rendre librement où il le souhaite, puis de déposer son véhicule dans un garage, par exemple T₆, afin d'emprunter la ligne R₁ de transport régional.

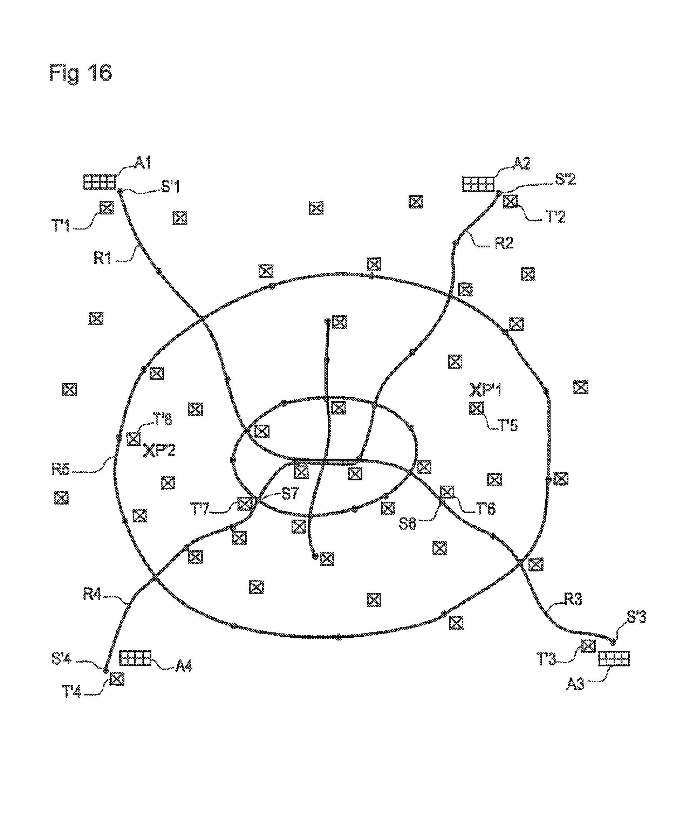

De même, comme le montre schématiquement la figure 16, la faible emprise au sol des garages permet de construire un très grand nombre de garages répartis autour du centre de l'agglomération.

Sur la figure 16, par exemple, on a représenté plusieurs lignes de transport régional R₁, R₂, R₃, R₄ et une ligne de transport R₅ de liaison entre les banlieues. En tête de chaque ligne est réalisée une aire de stationnement A₁, A₂ ... de grande capacité, permettant aux usagers venant de l'extérieur de garer leur véhicule personnel, ainsi qu'un garage automatique pour véhicules autonomes T'₁, T'₂ ... pouvant avoir une grande capacité adaptée à la fréquence prévisible d'utilisation en tête de ligne.

De la sorte, un usager venant d'une ville éloignée peut laisser son véhicule personnel sur l'aire de stationnement A₁ et emprunter, soit la ligne de transport R₁ pour aller vers le centre, soit un véhicule autonome dans le garage T'₁ pour aller vers un point quelconque en banlieue où il trouvera, pour garer son véhicule, un autre garage T'₅, en étant assuré, au retour, d'obtenir rapidement un autre véhicule autonome pour revenir à l'aire de stationnement A₁.

De même, une personne habitant en banlieue, par exemple en P'₁ et souhaitant aller dans une autre banlieue, par exemple en P'₂, pourra se procurer un véhicule dans un garage T'₅ à proximité de son domicile, rejoindre une station S₆ de transport en commun, en laissant le véhicule au garage T'₆ situé à proximité, prendre les transports en commun jusqu'à une station S₇, reprendre un véhicule au garage T'₇ situé à proximité et le restituer au garage T'₈ proche de sa destination.

On voit que les possibilités sont multiples et laissent à l'usager le choix de son mode de transport en sachant que les temps de correspondance sont réduits si les garages automatiques sont répartis en nombre suffisant sur le territoire.

Ainsi, alors que les correspondances entre les lignes de transport régionales ne sont assurées, habituellement, que dans le centre de l'agglomération, le système de partage venant, selon l'invention, en complément du réseau de transport en commun, permettra de quitter une première ligne R₁ dans une station équipée d'un garage, de prendre un véhicule autonome, de rejoindre une autre ligne, par exemple R₄ à une station équipée d'un garage et d'y restituer le véhicule pour reprendre la ligne R₄, la correspondance étant ainsi effectuée sans passer par le centre.

## Revendications

1. Procédé de transport collectif de personnes avec partage de véhicules individuels, dans lequel une pluralité de véhicules (5) sont mis à la disposition d'un ensemble d'usagers pour leurs déplacements à l'intérieur d'un territoire équipé d'une pluralité de garages (T) avec des moyens automatiques de réception d'un véhicule après usage pour son stockage dans le garage (T) et de mise à disposition d'un véhicule stocké (51) pour sa prise en charge par un usager en vue d'un déplacement individuel à l'intérieur du territoire pour un certain temps et sur une certaine distance jusqu'à remise du véhicule dans l'un des garages (T), **caractérisé par le fait que**, le territoire étant une agglomération urbaine équipée d'un réseau de lignes de transport en commun (R, M) avec des stations simples (S) et des stations de correspondance (C) aux croisements de lignes, les garages sont situés à une faible distance, parcourable à pied en quelques minutes, au moins de certaines des stations de correspondance (C) du réseau et sont du type à déplacement vertical des véhicules permettant le stockage d'au moins une dizaine de véhicules (5) sur une surface au sol réduite, chaque garage comportant, au niveau d'une plate-forme de manutention (4), au moins un emplacement d'entrée vide (13) pour la réception immédiate d'un véhicule après usage et un emplacement de sortie (12) contenant un véhicule disponible (51) pour la prise en charge immédiate de celui-ci par un usager, lesdits véhicules individuels (5) constituant, pour les usagers, un complément au réseau de transport en commun (R, M) permettant à tout moment, à un usager, de prendre en charge un véhicule (51) à la sortie d'une station de transport en commun, d'effectuer un trajet individuel et de restituer le véhicule sur l'emplacement de réception (12) d'un garage (T) situé à proximité immédiate de sa destination ou bien d'une station de correspondance (C) pour continuer son déplacement par transport en commun.

2. Procédé de transport selon la revendication 1 , **caractérisé par le fait que** chaque garage automatique (T) est du type à Noria avec déplacement vertical de cases de stockage (1) sur deux colonnes, respectivement montante (11) et descendante (11'), de façon à permettre, d'une part le rangement rapide d'un véhicule (5) sur l'emplacement d'entrée et son remplacement immédiat par une case vide (12) prête à recevoir un nouveau véhicule et, d'autre part, après enlèvement d'un véhicule (51) par un usager, la mise en place immédiate d'un nouveau véhicule (52) sur l'emplacement de sortie (13) du garage (T).

3. Procédé de transport selon la revendication 2, **caractérisé par le fait que** chaque garage automatique (T) du type à Noria comporte deux colonnes de case de stockage (1), respectivement ascendante (11) et descendante (11') avec, sur une colonne, au moins une case vide au niveau d'une plate-forme de manutention (4), constituant un emplacement de réception (12) et, sur l'autre colonne, une case (13) contenant un véhicule disponible (51) et que le garage est placé dans un bâtiment (2) dont la partie inférieure (21) est enterrée à une profondeur pouvant varier, de façon que la partie supérieure (24) se trouvant au dessus du niveau de manutention, s'étende sur une hauteur compatible avec le site dans lequel est placé le garage (T) .

4. Procédé de transport selon l'une des revendications précédentes, **caractérisé par le fait que**, l'agglomération comportant un centre entourée de banlieues périphériques desservies par un réseau de transport régional (R₁, R₂ ...). au moins certaines des stations du réseau de transport régional sont équipées de garages automatiques (T'₁, T₂ ...) pour le stockage de véhicules disponibles (5), de façon qu'un usager empruntant une ligne de transport régionale (R₁) puisse, à la sortie d'une station, prendre en charge immédiatement un véhicule (5) dans un garage (T) situé à proximité, pour continuer individuellement son déplacement jusqu'à une station d'une autre ligne (R₄) et restituer son véhicule dans un autre garage situé à proximité de cette station.

5. Procédé de transport selon l'une des revendications précédentes, **caractérisé par le fait que** les parties du territoire ne comportant pas de station de transport en commun sont équipées de garages automatiques (T'₁, T₂...) répartis de façon à être accessibles rapidement à pied pour un usager pouvant ainsi prendre en charge un véhicule autonome (5) pour rejoindre, soit une station de transport en commun équipée d'un garage (T) pour la réception du véhicule, soit un autre garage à proximité de sa destination, pour y déposer son véhicule.

6. Procédé de transport selon l'une des revendication précédentes, **caractérisé par le fait que** le territoire comporte au moins deux sites urbains équipés chacun d'un réseau de transport collectif et de garages automatiques , les deux sites étant espacés l'un de l'autre d'une distance compatible avec l'autonomie d'un véhicule (5) de façon à permettre le transport par un véhicule autonome soit à l'intérieur d'un même site, soit d'un site à l'autre.

7. Procédé de transport selon l'une des revendications précédentes, **caractérisé par le fait que** le territoire est équipé, autour du centre de l'agglomération, d'aires (A₁, A₂ ...) de stationnement d'un grand nombre de véhicules privés, placés respectivement à proximité de stations de transport en commun et équipées chacune d'un garage automatique (T₁, T₂...) de façon que, après avoir garé son véhicule privé sur une aire de stationnement (A₁) un usager ait le choix, selon sa destination, d'emprunter la ligne de transports en commun (R₁) ou de prendre un véhicule autonome (5) dans le garage automatique (T₁) situé à proximité, pour accéder à un point du territoire (P'₂) non desservi et remettre son véhicule (5) dans un garage automatique, à proximité de sa destination.

8. Système global de transport de personnes dans une agglomération urbaine comportant :
- au moins un réseau (R, M) de lignes de transport en commun avec des stations simples (S) et des stations de correspondance (C) aux croisements des lignes ;
- un ensemble de véhicules autonomes (5) munis de moyens de verrouillage - déverrouillage et mise en route susceptibles d'être actionnés par les mêmes moyens de commande, lesdits véhicules (5, 51) étant mis à la disposition d'un ensemble d'usagers munis chacun d'un titre de transport personnalisé (8) formant un moyen de commande ;
- une pluralité de garages automatiques (T) placés au moins à proximité de certaines stations du réseau ; chaque garage étant de type à déplacement vertical des véhicules permettant le stockage d'au moins une dizaine de véhicules (5) sur une surface au sol réduite et comportant, au niveau d'une plate-formes de manutention (4), au moins un emplacement vide (12) pour la réception immédiate d'un véhicule après usage et un emplacement (13) contenant un véhicule disponible (51) prêt à être pris en charge par un usager ;
- chaque usager ayant à se déplacer jusqu'à un point de l'agglomération pouvant ainsi effectuer une partie du trajet par transport en commun et une autre partie en véhicule individuel avec un déplacement à pied et un temps d'attente très réduits pour la prise en charge et la restitution du véhicule.

9. Système de transport selon la revendication 8, **caractérisé par le fait que** chaque titre de transport personnalisé (8) comporte un moyen de commande du verrouillage-déverrouillage et de mise en route de l'un quelconque des véhicules (5) et constitue une autorisation d'accès à l'un quelconque des garages (2) pour la prise en charge d'un véhicule (5) sur l'emplacement de sortie (12) dudit garage (2) et pour la remise d'un véhicule (51) sur l'emplacement d'entrée (13) d'un garage quelconque, après un déplacement libre.

10. Système de transport selon l'une des revendications 8 et 9, **caractérisé par le fait que** chaque titre de transport personnalisé (8) constitue un moyen de paiement, par son porteur, de l'usage du véhicule (5) selon la distance d'utilisation ou la durée parcourue.

11. Système de transport selon la revendication 10, **caractérisé par le fait que** les titres de transport sont constitués chacun d'un carte à puce (8) avec code personnalisé programmé pour permettre au porteur, après saisie de son code, toutes les opérations nécessaires à la prise en charge et le retour d'un véhicule (5) et le paiement de l'usage de celui-ci.

12. Système de transport selon la revendication 11 , **caractérisé par le fait que** les titres de transport (8) sont des cartes à puce programmées de façon à servir, d'une part, d'autorisation d'accès au réseau de transport en commun (R, M) et, d'autre part, d'autorisation d'accès aux garages automatiques (T) et aux véhicules autonomes (5) et de moyen de paiement de leur usage.

13. Système de transport selon la revendication 8, **caractérisé par le fait que** l'accès à un garage automatique et l'usage d'un véhicule sont autorisé par un système de contrôle central accessible par téléphone portable utilisant ou pas les services internet afin de délivrer des autorisations d'utilisations.

14. Système de transport selon l'une des revendications précédentes, **caractérisé par le fait que** le garage automatique est du type à Noria et comporte une pluralité de cases superposées (1) formant chacune un emplacement de rangement d'un véhicule, et suspendues à un lien sans fin (3) par des moyens de maintien de chaque case suivant un axe de suspension vertical, ledit lien (3) étant tendu entre deux plateaux écartés (31, 32) tournant autour d'axes parallèles horizontaux (30, 30') de façon à commander le déplacement des cases (1) suivant deux directions verticales, respectivement ascendante (11) et descendante (11'), en passant devant au moins une zone de manutention placée sur un plancher (4) à un niveau intermédiaire entre les deux plateaux rotatifs (31, 32), le mouvement du lien (3) étant arrêté au moment du passage d'une case (12) contenant un véhicule (51) au niveau de la zone de manutention (4) pour la remise de celui-ci à usager, ou bien d'une case vide (13) pour le dépôt, par un usager, d'un véhicule en retour (5).

15. Procédé et système de transport selon l'une des revendications précédentes, **caractérisé par le fait que** les véhicules sont à propulsion électrique ou biénergie et que chaque emplacement de rangement (1) est équipé de moyens (23) de rechargement des batteries du véhicules pendant le temps de stockage dans le garage.
